# FASCICULE DE BREVET EUROPEEN

(11) **EP 0 761 962 B1**
(45) Date de publication et mention de la délivrance du brevet: **20.10.1999**
(21) Numéro de dépôt: 96401637.2
(22) Date de dépôt: 23.07.1996
(51) Int. Cl.: F02P 5/15

(54) **Procédé de dépollution de moteur à combustion interne à deux temps et applications associées**
Methode zur Abgasentgiftung in einer Zweitaktbrennkraftmaschine und deren Anwendungen
Two-stroke internal combustion engine depollution method and associated applications

(30) Priorité: 08.09.1995 FR 9510797
(43) Date de publication de la demande: 12.03.1997
(73) Titulaire: INSTITUT FRANCAIS DU PETROLE, 92500 Rueil Malmaison (FR)
(72) Inventeur: Duret, Pierre, 78500 Sartrouville (FR)

(56) Documents cités:
- GB-A- 2 238 351
- PATENT ABSTRACTS OF JAPAN vol. 003, no. 097 (M-069), 17 Août 1979 & JP-A-54 072334 (FUJI HEAVY IND LTD), 9 Juin 1979,
- SAE TECHN. PAPERS - SAE720195, - 1972 pages 704-722, XP002003646 GLICHI YAMAGISHI ET AL.: "A study of two-stroke cycle fuel injection engines for exhaust gas purification"

## Description

La présente invention concerne le domaine des moteurs à combustion interne à deux temps à allumage commandé avec une certaine avance par rapport au Point Mort Haut (PMH) afin d'optimiser la combustion sur certaines plages de fonctionnement.

Dans ce domaine, un problème important réside dans la pollution notamment due aux émissions d'hydrocarbures imbrûlés. Il est connu que de telles émissions sont essentiellement créées par un court-circuitage direct du mélange frais (n'ayant pas brûlé lors de la combustion) vers l'échappement pendant la phase dite de balayage. Théoriquement pendant cette phase de balayage, en fin de combustion, du mélange carburé balaye la chambre de combustion afin de repousser les gaz brûlés hors de la chambre, vers l'échappement.

Une proportion souvent comprise entre 30 et 50 % de ce mélange frais est alors court-circuitée directement vers l'échappement, sans avoir brûlé.

Pour lutter contre cet inconvénient majeur, un grand nombre de solutions sont proposées. Toutes les solutions connues visent à séparer et retarder l'alimentation en carburant de l'alimentation en air servant au balayage des gaz brûlés.

Les solutions adoptées peuvent consister en une stratification de gaz frais plus riches par rapport à des gaz frais plus pauvres et plus fortement court-circuités : le brevet US 5 007 384 décrit un tel processus.

On peut aussi diminuer les émissions d'hydrocarbures imbrûlés en réalisant un balayage des gaz brûlés par de l'air frais (non carburé) et une injection directe de carburant dans ou juste en amont de la chambre de combustion : le brevet FR 2 575 522 divulgue un tel système d'injection pneumatique de carburant.

L'efficacité de la séparation du carburant par rapport aux gaz brûlés est plus ou moins importante selon les processus utilisés. Dans tous les cas, l'efficacité n'est jamais totale.

Il est donc reconnu que selon l'efficacité du dispositif d'introduction séparée et retardée du carburant par rapport au balayage, le gaz d'échappement contiendra une quantité d'hydrocarbures imbrûlés plus ou moins grande. Toutefois, avec une efficacité même minimale il est possible d'obtenir une composition des gaz d'échappement qui comprend un excès d'air et d'oxygène par rapport au carburant. En effet, si l'air de balayage est plus fortement court-circuité que le carburant (ou le mélange air-carburant) introduit séparément, et sous réserve que le mélange global air total admis plus carburant ne soit pas excessivement riche, le mélange air-carburant présent à l'échappement et issu du court-circuitage sera toujours pauvre.

Le carburant imbrûlé présent à l'échappement étant donc associé à un excès d'air, il peut dès lors être oxydé et converti en CO₂ et H₂O avec un système de traitement des gaz d'échappement approprié. Ce système est généralement constitué d'un pot catalytique imprégné de métaux précieux.

Une autre solution, en conformité avec la présente invention peut consister à retarder le moment de l'avance à l'allumage. Cette solution a déjà été brièvement évoquée dans un document intitulé "a study of two-stroke cycle fuel injection engines for exhaust gas purification", publié en 1972 par la SAE (Society of Automotive Engineers - USA) sous le numéro SAE 720195.

La présente invention a pour objet d'améliorer ce dernier type de dépollution, par oxydation des hydrocarbures imbrûlés présents à l'échappement.

Ainsi le procédé selon l'invention s'applique à des moteurs deux temps à combustion interne comprenant une introduction séparée et différée du carburant vis-à-vis de l'air utilisé pour le balayage des gaz brûlés, et comprenant un retard sur l'avance à l'allumage.

Selon l'invention, le retard sur l'avance à l'allumage par rapport à une avance à l'allumage dite optimale (c'est-à-dire fournissant le meilleur rendement de combustion) est tel qu'il permet d'augmenter la température des gaz d'échappement et de créer une post-oxydation des hydrocarbures imbrûlés contenus dans lesdits gaz d'échappement, ladite post-oxydation évitant l'utilisation d'un catalyseur spécifique à l'échappement.

En d'autres termes, selon l'invention, on retarde suffisamment le moment de l'avance à l'allumage pour qu'au moment de l'ouverture de la (ou des) lumières d'échappement, les gaz brûlés soient encore à une température élevée capable d'oxyder les hydrocarbures imbrûlés présents dans l'échappement. Cette solution permet de ne pas avoir de catalyseur spécifique à l'échappement.

Selon un autre aspect de l'invention, ledit retard est réalisé préférentiellement dans une zone de fonctionnement du moteur à vitesse stabilisée.

Par ailleurs, le procédé selon l'invention peut en outre consister à faire varier la richesse ou le temps d'injection du carburant en relation audit retard.

Le retard peut être contrôlé mécaniquement ou électroniquement. Dans ce dernier cas la température des gaz d'échappement peut asservir le contrôle.

Une application particulière de l'invention peut concerner les véhicules à deux roues n'ayant pas de boîte de vitesses, pour lesquels le procédé est en outre mis en oeuvre au voisinage de la puissance maximale et pour des régimes élevés du moteur.

Sans sortir du cadre de l'invention, le procédé de dépollution peut être mis en oeuvre dans des véhicules à deux roues ayant une boîte de vitessess à plusieurs rapports, le procédé étant alors essentiellement mis en oeuvre pour des régime et puissance faibles, correspondants à une utilisation particulière du véhicule.

D'autres détails, caractéristiques et avantages de la présente invention apparaîtront mieux à la lecture de la description qui va suivre faite à titre illustratif et nullement limitatif, en référence aux dessins annexés selon lesquels :
- La figure 1 montre des courbes définies par les émissions d'hydrocarbure en fonction du régime moteur, selon l'art antérieur et selon l'invention;
- La figure 2 concerne des courbes de l'avance à l'allumage en fonction de la charge du moteur, selon l'art antérieur et selon l'invention;
- La figure 3 illustre des courbes de fonctionnement selon l'invention d'un moteur marin de type hors-bord;
- La figure 4 montre des courbes de fonctionnement selon l'invention d'un moteur deux temps pour véhicules (deux roues) non munis de boîtes de vitesses; et
- La figure 5 a trait à des courbes de fonctionnement selon l'invention d'un moteur deux temps pour véhicules deux roues équipés de boîtes de vitesses.

On sait que la post-oxydation naturelle contrôlée par avance à l'allumage peut présenter des inconvénients. En effet, le retard d'avance à l'allumage dégrade le couple et donc les performances du moteur.

Avantageusement, la présente invention permet donc de limiter le fonctionnement en post-oxydation naturelle aux zones de fonctionnement les plus courantes du moteur, c'est-à-dire aux zones de vitesses stabilisées, et de ne pas utiliser cette stratégie autour de la zone de couple maximum du moteur, qui peut ainsi garder toutes ses capacités d'accélération ponctuelle.

L'avantage de cette caractéristique est une dépollution maximale des hydrocarbures et du monoxyde de carbone, sans besoin de catalyseur dans la zone d'utilisation la plus fréquente du moteur, qui est d'ailleurs très souvent la zone de fonctionnement sujette à la réglementation anti-pollution.

Par ailleurs, le procédé selon l'invention permet au moteur de conserver ses capacités d'accélérations pour des phases transitoires de plus courte durée.

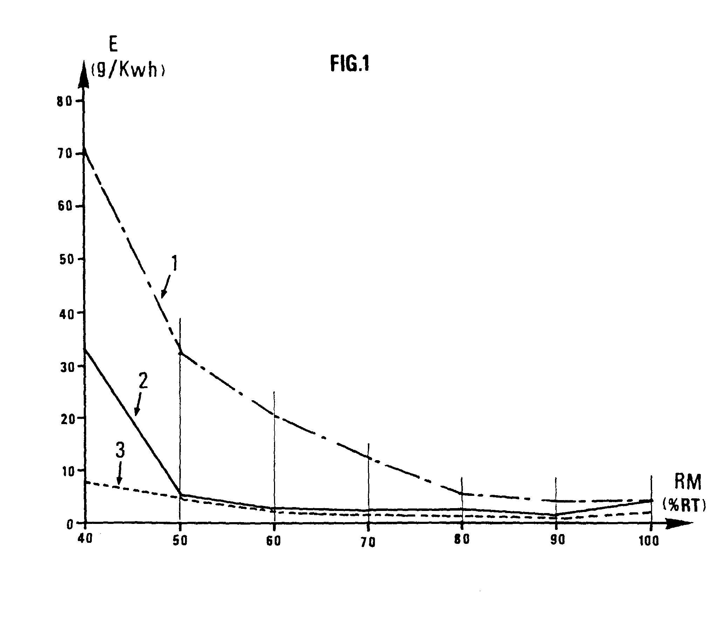

La figure 1 montre des courbes définies par des émissions d'hydrocarbures E (en g/kWh) en fonction du régime moteur RM (exprimé en % du régime moteur maximal RT).

La courbe 1 est obtenue selon l'art antérieur, par exemple par un moteur selon le brevet français FR 2 575 522 ayant une injection pneumatique de carburant. Ici les émissions maximales, obtenues pour des régimes moteurs d'environ 40 % du régime maximal, sont inférieurs à 70 g/kWh et deviennent inférieures à 10 g/KWh pour des régimes moteurs supérieurs à 70% du régime maximal. Ceci représente globalement des valeurs 5 à 10 fois moins élevées que les valeurs obtenues pour des moteurs deux temps conventionnels (à carburateur).

La courbe (2) montre ces mêmes émissions d'HC en appliquant le procédé suivant l'invention c'est-à-dire sans catalyseur spécifique, ou modification structurelle de la ligne d'échappement du moteur.

La courbe (3) montre le niveau d'émissions qui peut être obtenu avec l'adjonction d'un catalyseur d'oxydation à très haute efficacité au moteur suivant la courbe (1).

Les faibles différences entre les deuxième et troisième courbes (2) et (3) montre l'intérêt du procédé suivant l'invention notamment pour les régimes moteur les plus élevés. En effet sans la complexité de l'addition d'un catalyseur, le niveau d'émissions est tout à fait comparable, notamment pour les régimes élevés.

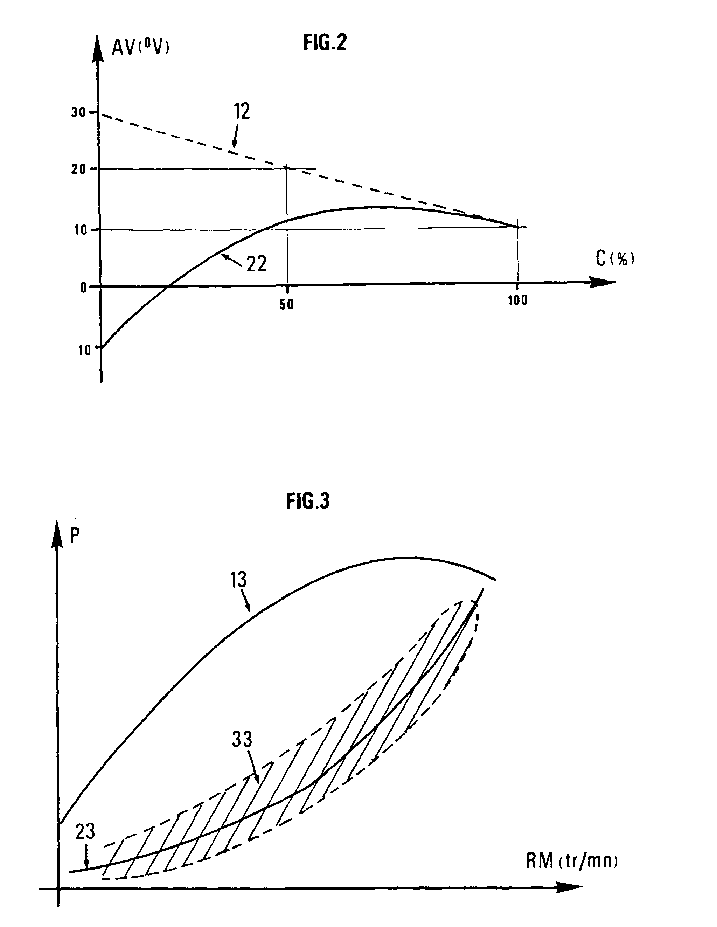

La figure 2 concerne l'avance à l'allumage en fonction de la charge C du moteur exprimée en % de la charge maximale. Sur cette figure, la courbe 12 (en pointillés) représente une courbe classique de réglage de l'avance à l'allumage, tandis que la courbe 22 (en traits pleins) correspond à un réglage selon l'invention.

La figure 2 montre que pour les charges élevées, le moteur retrouve l'avance à l'allumage optimale, permettant d'obtenir les performances et le couple maximum disponible. Par contre, lorsque la charge diminue et que la température des gaz d'échappement décroît en conséquence, l'avance est alors retardée de plus en plus, de manière à maintenir une température des gaz d'échappement suffisante pour la post-oxydation des hydrocarbures et du monoxyde de carbone. Ainsi pour les charges les plus faibles, l'avance peut être très retardée jusqu'à avoir l'allumage après le point mort haut.

Les figures 3, 4 et 5 illustrent chacune des courbes relatives à la puissance d'un moteur en fonction de son régime.

La figure 3 concerne un moteur marin, de type hors-bord. La courbe 13 est la courbe de puissance maximale admissible en fonction du régime. La courbe 23 est la courbe de fonctionnement du bateau à vitesse stabilisée. La zone 33, hachurée, délimite "l'espace" de mise en oeuvre de l'invention, là où une post-oxydation est créée. La courbe réellement utilisée est déterminée à l'intérieur de la zone 33, en fonction de l'hélice choisie pour propulser le bateau.

Sachant que les réglementations (actuelles et en projet) concernant les émissions de polluants sont toutes axées sur les valeurs autour de la courbe 23 de fonctionnement à vitesse stabilisée du bateau, la présente invention permet aux moteurs dans lesquels elle est mise en oeuvre de répondre aux normes les plus sévères. La vitesse stabilitée du véhicule peut être détectée par tout moyen connu, notamment via un contrôle électronique du moteur.

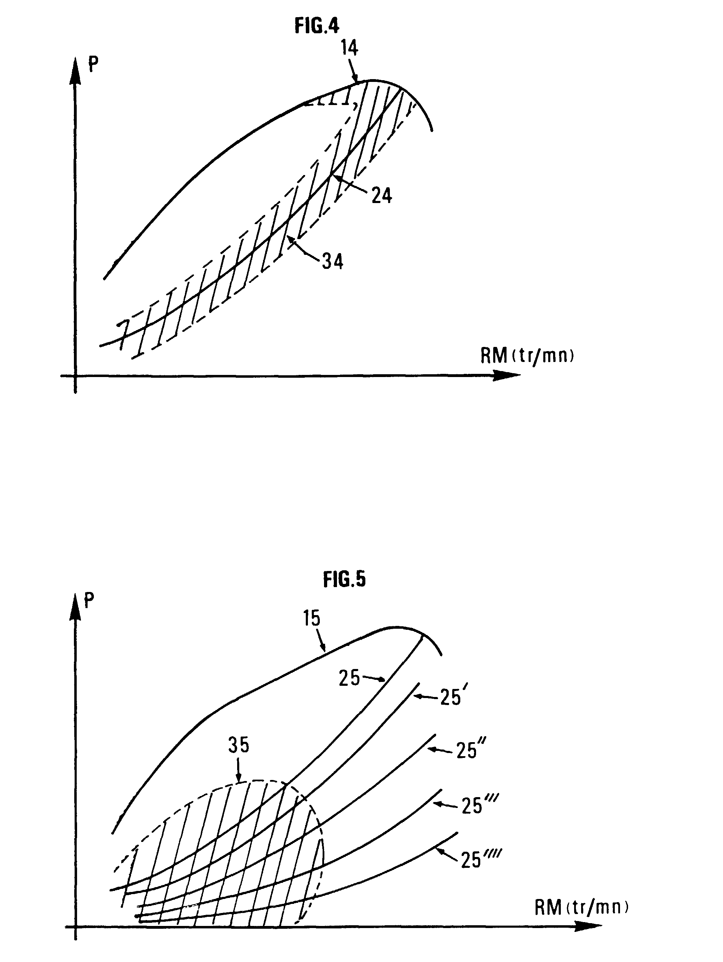

La figure 4 est relative à une application de l'invention à des moteurs deux temps de véhicules à deux roues ne comportant pas de boîte de vitesses. Comme pour l'application précédente, c'est dans la zone hachurée 34 environnant le fonctionnement du véhicule deux roues à vitesse stabilisée (courbe 24) que l'invention est préférentiellement mise en oeuvre. En outre la post-oxydation est ici réalisée autour des puissances et régimes maximals, qui correspondent à la principale plage de fonctionnement du véhicule.

La figure 5 concerne une application de l'invention à des moteurs deux temps de véhicules équipés de boîtes de vitesses. Les courbes 25 et 25 prime correspondent aux fonctionnements pour les différents rapports de vitesses utilisés. La zone hachurée 35, qui correspond à la zone de fonctionnement la plus utilisée est celle dans laquelle l'invention est mise en oeuvre. La zone 35 comprend les points de fonctionnement pris en compte dans les cycles normalisés de mesure des polluants tels que par exemple le cycle ECE R40.

Le principal avantage de la présente invention réside en ce que le moteur dans lequel est mise en oeuvre l'invention peut fonctionner, en dehors de la zone (33, 34, 35) de post-oxydation, à couple et puissance maximals.

La post-oxydation peut être obtenue par un moyen de contrôle mécanique et/ou électronique asservi par exemple à la température des gaz d'échappement. Cette caractéristique est particulièrement intéressante lorsque la post-oxydation entraine des températures de gaz d'échappement très élevées, préjudiciables à l'environnement du moteur et de l'échappement dans le véhicule.

De ce qui précède, il ressort que le retard d'avance à l'allumage est un paramètre prépondérant pour le contrôle de la post-oxidation. Toutefois il n'est pas exclu, en particulier grâce à une électronique appropriée d'y associer le contrôle d'un (ou de plusieurs) paramètre(s) secondaire(s) afin d'améliorer l'efficacité du procédé. Ces paramètres secondaires peuvent être par exemple la richesse en carburant admis, la durée du temps d'injection pour un moteur à injection.

Enfin il est rappelé que la présente invention ne s'applique pas aux moteurs alimentés par un mélange air-essence homogène car alors, en cas de fonctionnement en mélange riche, le gaz à l'échappement ne contient pas assez d'oxygène pour oxyder tous les hydrocarbures imbrûlés.

## Revendications

1. Procédé de dépollution de moteur deux temps à combustion interne comprenant une introduction séparée et différée du carburant vis-à-vis de l'air utilisé pour le balayage des gaz brûlés, et comprenant un retard sur l'avance à l'allumage, caractérisé en ce que ledit retard est tel qu'il permet d'augmenter la température des gaz d'échappement et de créer une post-oxydation des hydrocarbures imbrûlés contenus dans lesdits gaz d'échappement, ladite post-oxydation évitant l'utilisation d'un catalyseur spécifique à l'échappement.

2. Procédé de dépollution selon la revendication 1, caractérisé en ce que ledit retard est réalisé préférentiellement dans une zone de fonctionnement du moteur pour laquelle le véhicule propulsé par ledit moteur est à vitesse stabilisée.

3. Procédé selon l'une quelconque des revendications précédentes, caractérisé en ce qu'il consiste en outre à faire varier la richesse ou le temps d'injection du carburant en relation audit retard.

4. Procédé selon l'une quelconque des revendications précédentes, caractérisé en ce que ledit retard est contrôlé mécaniquement.

5. Procédé selon l'une quelconque des revendications 1 à 3, caractérisé en ce que ledit retard est contrôlé électroniquement.

6. Procédé selon la revendication 5, caractérisé en ce que ledit contrôle électronique est asservi à la température des gaz d'échappement.

7. Application du procédé selon l'une quelconque des revendications précédentes à un moteur de véhicule à deux roues n'ayant pas de boîte de vitesses, caractérisé en ce que le procédé est en outre mis en oeuvre au voisinage de la puissance maximale et pour des régimes élevés du moteur.

8. Application du procédé selon l'une quelconque des revendications 1 à 6 à un moteur de véhicule à deux roues ayant une boîte de vitesses à plusieurs rapports, caractérisée en ce que le procédé est essentiellement mis en oeuvre pour des régime et puissance faibles, correspondants à une utilisation particulière du véhicule.

## Patentansprüche

1. Verfahren zur Abgasentgiftung von Zweitaktbrennkraftmaschinen mit einer gesonderten und verzögerten Einführung des Kraftstoffs bezogen auf die Luft, die für das Spülen der verbrannten Gase verwendet wird und mit einer Verzögerung gegenüber der Zündvorstellung, dadurch gekennzeichnet, daß diese Verzögerung es ermöglicht, die Temperatur der Auslaßgase zu erhöhen und eine Nachverbrennung der unverbrannten in diesen Auslaßgasen enthaltenen Kohlenwasserstoffe zu erzeugen, wobei die Nachverbrennung die Verwendung eines spezifischen Katalysators am Auslaß vermeidet.

2. Verfahren zur Abgasentgiftung nach Anspruch 1, dadurch gekennzeichnet, daß diese Verzögerung bevorzugt in einer Arbeitszone des Motors realisiert wird, für die das durch diesen Motor angetriebene Fahrzeug sich auf stabilisierter Geschwindigkeit befindet.

3. Verfahren nach einem der vorhergehenden Ansprüche, dadurch gekennzeichnet, daß es darin besteht, die Fettheit oder die Einspritzzeit des Kraftstoffs, bezogen auf diese Verzögerung, zu variieren.

4. Verfahren nach einem der vorhergehenden Ansprüche, dadurch gekennzeichnet, daß diese Verzögerung mechanisch geregelt wird.

5. Verfahren nach einem der Ansprüche 1 bis 3, dadurch gekennzeichnet, daß diese Verzögerung elektronisch geregelt wird.

6. Verfahren nach Anspruch 5, dadurch gekennzeichnet, daß diese elektronische Regelung der Temperatur der Auslaßgase zugeordnet ist.

7. Anwendung des Verfahrens nach einem der vorhergehenden Ansprüche auf einen Motor für Fahrzeuge mit zwei Rädern, die nicht über ein Schaltgehäuse verfügen, dadurch gekennzeichnet, daß das Verfahren im übrigen benachbart der maximalen Leistung und für erhöhte Drehzahlen des Motors eingesetzt wird.

8. Anwendung des Verfahrens nach einem der Ansprüche 1 bis 6 auf einen Motor für ein Fahrzeug mit zwei Rädern, das über ein Schaltgehäuse mit mehreren Schaltstufen verfügt, dadurch gekennzeichnet, daß das Verfahren im wesentlichen für geringe Drehzahlen und Leistungen eingesetzt wird, die einer besonderen Verwendung des Fahrzeugs entsprechen.

## Claims

1. A method of reducing pollution from a two-stroke internal combustion engine operating on separate and delayed delivery of the fuel relative to the air used to scavenge the burned gases and incorporating an advanced ignition delay, characterised in that said delay is such that it enables the temperature of the exhaust gases to be increased, generating post-oxidation of the unburned hydrocarbons contained in said exhaust gases, said post-oxidation obviating the need to use a specific catalyst at the exhaust.

2. A method of reducing pollution as claimed in claim 1, characterised in that said delay is preferably applied in an operating range of the engine at which the vehicle driven by said engine is at stabilised speed.

3. A method as claimed in any one of the preceding claims, characterised in that it also consists in varying the air-fuel ratio or the injection time of the fuel in relation to said delay.

4. A method as claimed in any one of the preceding claims, characterised in that said delay is mechanically controlled.

5. A method as claimed in any one of claims 1 to 3, characterised in that said delay is electronically controlled.

6. A method as claimed in claim 5, characterised in that said electronic control is regulated by the temperature of the exhaust gases.

7. Application of the method as claimed in any one of the preceding claims to an engine of a two-wheeled vehicle having no gearbox, characterised in that the method is also applied close to maximum power and for high engine speeds.

8. Application of the method as claimed in any one of claims 1 to 6 to an engine of a two-wheeled vehicle having a gearbox with multiple gear ratios, characterised in that the method is essentially applied for low speeds and powers corresponding to a particular use of the vehicle.
